# EUROPÄISCHE PATENTANMELDUNG

(11) **EP 1 710 887 A2**
(43) Veröffentlichungstag der Anmeldung: **11.10.2006**
(21) Anmeldenummer: 06111893.1
(22) Anmeldetag: 29.03.2006
(51) Int. Cl.: H02H 3/00

(54) **Verfahren zum Ein- und Darstellen der Auslösekennlinie von Schutzschaltern**

(30) Priorität: 08.04.2005 DE 102005016105
(71) Anmelder: Moeller GmbH, 53115 Bonn (DE)
(72) Erfinder: Schmidt, Paul-Walter, 53773 Hennef (DE)

(57) **Zusammenfassung**

Die Erfindung betrifft ein Verfahren zum Einstellen und Darstellen der Auslösekennlinie von Schutzschaltern (10) mit Elektronikauslöser (12). Einstellparameter werden durch Stellmittel (13; 27) eingestellt, vom Elektronikauslöser (12) übernommen und mikroprozessorgestützt als Auslösekennlinie gespeichert. Von dem Elektronikauslöser (12) werden die Einstellparameter über eine Kommunikationsverbindung (5) an eine Anzeigeeinheit (20) übertragen. In der Anzeigeeinheit (20) werden die Einstellparameter gespeichert, aus ihnen mikroprozessorgestützt die Auslösekennlinie berechnet und das reale Abbild (25) der Auslösekennlinie zusammen mit einem Koordinatennetz (26) visuell dargestellt.

## Beschreibung

### Technisches Gebiet

Die Erfindung betrifft ein Verfahren, mit dem sich die Auslösekennlinie von mit elektronischen Auslösemitteln ausgestatteten Schutzschaltern, wie beispielsweise Leistungsschaltern, einstellen und darstellen lässt.

### Stand der Technik

Aus der Druckschrift EP 634 825 B1 ist ein Leistungsschalter bekannt, der einen auf einem Mikroprozessor basierenden Elektronikauslöser aufweist, der beim Überschreiten einer eingestellten Strom-Zeit-Auslösekennlinie durch die mittels Stromerfassungsmitteln gemessenen Ströme durch den Leistungsschalter über eine Auslöseeinrichtung die Schalterkontakte des Leistungsschalters öffnet. Auf der Bedienseite des Leistungsschalters ist eine stark stilisierte Auslösekennlinie grafisch abgebildet, die in üblicher Weise einen langzeitverzögerten Abschnitt zum Abschalten mäßiger Überströme, einen kurzzeitverzögerten Abschnitt zum Abschalten höherer Überströme und einen quasi unverzögerten Abschnitt zum Abschalten sehr hoher Überströme aufweist. Neben den einzelnen Kennlinienabschnitten sind Stellregler und zugehörige Anzeigen zum Einstellen und Anzeigen der entsprechenden Auslösezeiten und Auslöseströme vorgesehen, wobei letztere als Verhältnis zum Nennstrom des Leistungsschalters bzw. zu einem anderen Auslösestrom angezeigt werden. Eine ähnliche Anordnung auf der Bedienseite eines Leistungsschalters zeigt EP 1 085 633 A1. Eine Anzeige zeigt eine stilisierte Auslösekennlinie sowie die zu den einzelnen Kennlinienabschnitten gehörenden Auslösezeiten und Auslöseströme. Unterhalb der Anzeige sind Tasten zur Funktionsselektion sowie zur schrittweisen Vergrößerung oder Verkleinerung sowie zur Übernahme der einzustellenden Parameter in den Elektronikauslöser vorgesehen. Bei der Einstellung eines bestimmten Kennlinienabschnittes wird dieser Abschnitt und der zugehörige Parameter deutlich hervorgehoben. Der EP 957 557 A2 ist ein Leistungsschalter mit stark vereinfachter grafische Darstellung einer Auslösekennlinie, mit Stellmitteln für Auslösezeiten und Auslöseströmen auf der Bedienseite sowie im Einzelnen einen Elektronikauslöser zu entnehmen. Mit den genannten Anordnungen kann der tatsächliche Verlauf der Auslösekennlinie nicht unmittelbar dargestellt und kontrolliert werden.

Nach EP 432 054 B1 werden die Einstellparameter für den Elektronikauslöser eines Leistungsschalters auf einer Fernübertragungseinrichtung eingestellt und über eine Infrarot-, Ultraschall- oder Zweidrahtverbindung in den Elektronikauslöser eingespeichert. Die Fernübertragungseinrichtung ist auf ihrer Bedienseite mit der Abbildung einer stark stilisierten Auslösekennlinie und mit Stellmitteln für die Einstellparameter ausgestattet. Die WO 98/54810 A1 offenbart eine über das Internet ferngesteuerte Überwachung eines mit einer entsprechenden Schnittstelle ausgestatteten elektronischen Überstromauslösers eines Leistungsschalters. An beliebiger Stelle kann der Überstromauslöser mittels eines Personalcomputers geprüft und bei Bedarf hinsichtlich seiner Einstellparameter neu eingestellt werden.

Es ist allgemein bekannt, aus einer Mindestzahl von Auslöse-Wertepaaren (Auslösestrom und Verzögerungszeit) die zugehörige Auslösekennlinie zu berechnen. Anleitungen und Hinweise hierzu finden sich in der US 5 987 393 A und dem Technical Catalogue 20002.04 der Firma ABB "HD4/R Mittelspannungs-Leistungsschalter für die Unterverteilung", Seiten 26 und 29 (Online am 01.04.2004; http://library.abb.com/GLOBAL/SCOT/scot235.nsf/VerityDispiay/57B29DAOA353C29DC1256F2D0035C29 2/$Fiie/CA_HD4-R(DE)A_1VCP000028.pdf).

### Darstellung der Erfindung

Der Erfindung liegt daher die Aufgabe zugrunde, die Auslösekennlinie direkt sichtbar einzustellen und darzustellen.

Einerseits wird die Aufgabe erfindungsgemäß dadurch gelöst, dass
A die mittels der Einstellmittel einstellbaren Einstellparameter vom Elektronikauslöser übernommen und mikroprozessorgestützt als Auslösekennlinie gespeichert werden,
B vom Elektronikauslöser die Einstellparameter über die Kommunikationsverbindung an die externe Anzeigeeinheit übertragen werden,
C in der Anzeigeeinheit die übertragenen Einstellparameter gespeichert werden und daraus die Auslösekennlinie mikroprozessorgestützt berechnet wird und
D auf der Anzeigeeinheit das Abbild der Auslösekennlinie zusammen mit einem Koordinatennetz dargestellt wird.

In Weiterbildung des erfindungsgemäßen Verfahrens können die Einstellparameter und damit die Auslösekennlinie wahlweise durch die mit dem Schutzschalter oder durch mit an der Anzeigeeinheit vorgesehene Stellmittel eingestellt werden. Weiterhin ist es von Vorteil, nur diejenigen an der Anzeigeeinheit eingestellte Einstellparameter wirksam werden zu lassen, die näher zum Koordinatenursprung liegen bezüglich der direkt am Schutzschalter eingestellten Auslösekennlinie. Damit wird gewährleistet, dass von der Anzeigeeinheit keine Einstellparameter im Elektronikauslöser wirksam werden können, die größer als die direkt am Schutzschalter eingestellten Einstellparameter sind.

Anderseits wird die Aufgabe erfindungsgemäß dadurch gelöst, dass
B vom Elektronikauslöser die Einstellparameter über die Kommunikationsverbindung an die Anzeigeeinheit übertragen werden,
C in der Anzeigeeinheit die übertragenen Einstellparameter gespeichert werden und daraus die Auslösekennlinie mikroprozessorgestützt berechnet wird,
D auf der Anzeigeeinheit das Abbild der Auslösekennlinie zusammen mit einem Koordinatennetz dargestellt wird,
E mittels an der Anzeigeeinheit vorgesehener Stellmittel einstellbare Einstellparameter über die Kommunikationsverbindung an den Elektronikauslöser übertragen werden und
F die übertragenen Einstellparameter vom Elektronikauslöser übernommen und mikroprozessorgestützt als Auslösekennlinie gespeichert werden.

Die jeweils aktuelle Auslösekennlinie, auf welche der Schutzschalter eingestellt ist, wird ständig auf der Anzeigeinheit angezeigt. Änderungen der Auslösekennlinie, die mittels der am Schutzschalter bzw. an der Anzeigeeinheit befindlichen Stellmitteln vorgenommen werden, werden unmittelbar angezeigt und können bei Bedarf unmittelbar verifiziert werden. Die Einstellparameter können einzeln oder wenigstens zum Teil gleichzeitig eingestellt bzw. verändert werden. Gegenüber dem Stand der Technik wird das reale Abbild der gesamten unmittelbar, eingestellten Auslösekennlinie des Schutzschalters visuell direkt exakt dargestellt. Die Kommunikation zwischen dem Elektronikauslöser und der Anzeigeeinheit kann mittels standardmäßiger Feldbussysteme oder/und firmeneigener Datenprotokolle ausgeführt werden. Die Kommunikationsverbindung kann drahtgebunden, funkgebunden oder optisch, beispielsweise infrarotgebunden, sein.

Die Kommunikation findet zwischen dem Elektronikauslöser des Schutzschalters und der Anzeigeinheit statt, die wahlweise mit dem Schutzschalter verbunden, in diesen integriert oder von diesem separat aufgestellt ist. Als separate Anzeigeeinheit kann auch ein Personalcomputer oder ein Notebook verwendet werden.

Das zusammen mit der Auslösekennlinie darzustellende Koordinatennetz wird vorteilhafterweise mittels eines Mikroprozessors in der Anzeigeeinheit erzeugt. Da die verfügbaren Auslösezeiten und Auslöseströme mehrere Dekaden überstreichen, wird die Auslösekennlinie zweckmäßigerweise in einem Koordinatennetz sowohl mit logarithmischer Stromachse als auch mit logarithmischer Zeitachse dargestellt.

### Kurze Beschreibung der Zeichnungen

Weitere Einzelheiten und Vorteile der Erfindung ergeben sich aus dem folgenden, anhand von Figuren erläuterten Ausführungsbeispiel. Es zeigen
- Figur 1:: eine das erfindungsgemäße Verfahren verwendende Anordnung;
- Figur 2:: eine beispielhafte Darstellung zur Einstellen einer Auslösekennlinie.

### Bester Weg zur Ausführung der Erfindung

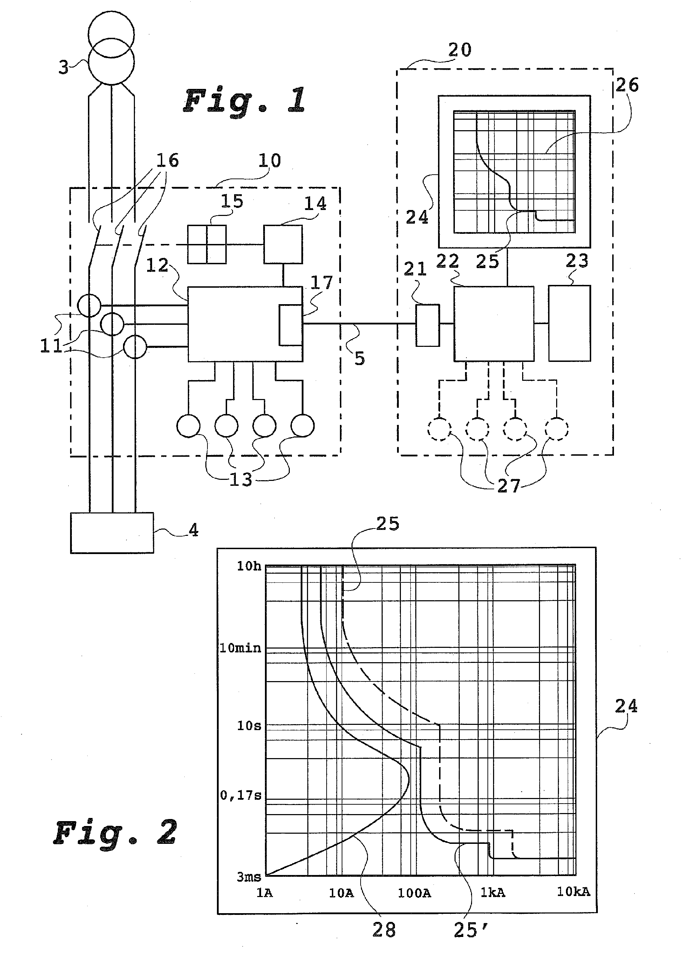

Die Anordnung nach Fig. 1 weist einen mehrpoligen Schutzschalter 10 in Form eines beispielsweise dreipoligen Leistungsschalters und eine von diesem getrennte Anzeigeeinheit 20 auf. Der Schutzschalter ist netzseitig mit einer Stromquelle 3 und lastseitig mit einem elektrischen Verbraucher 4, beispielsweise einem Elektromotor, verbunden. Der vom Verbraucher 4 aufgenommene Strom wird innerhalb des Schutzschalters 10 von Stromerfassungsmitteln 11 in Form von Stromwandlern erfasst und einem Elektronikauslöser 12 zur Auswertung und Überwachung zugeführt. Der Elektronikauslöser 12 beinhaltet in bekannter Weise A/D-Wandler, einen Mikroprozessor und Speichermittel. Der Elektronikauslöser 12 ist mit Stellmitteln 13 in Form von beispielsweise hexadezimal kodierten Stufenschaltern verbunden, mit denen die Einstellparameter eingestellt werden.

Folgende Einstellparameter sind im Allgemeinen vorzugeben:
- den an den Verbraucher 4 angepasste Nennstrom im Verhältnis zu dem maximalen Nennstrom, der durch die Baugröße des Schutzschalters 10 bestimmt ist,
- eine festgelegte langverzögernde Auslösezeit, nach deren Ablauf der Schutzschalter 10 bei einem in dieser Zeit bestehenden bestimmten Verhältnis von Überlaststrom zum Nennstrom abschalten soll,
- das Verhältnis des Überstromes, bei dem die kurzzeitverzögerte Abschaltung einsetzen soll, zum Nennstrom,
- die kurzverzögernde Auslösezeit, nach deren Ablauf der Schutzschalter 10 bei dem vorgenannten Überstrom abschalten soll,
- das Verhältnis des Kurzschlussstromes, bei dem die quasi unverzögerte Abschaltung einsetzen soll, zum Nennstrom.
Dem Fachmann ist bekannt, dass es auch Schutzschalter mit weniger oder zusätzlichen Einstellparametern gibt.

Die eingestellten Einstellparameter werden vom Elektronikauslöser 12 übernommen und in eine Auslösekennlinie umgerechnet, die damit einer Funktion der Auslösezeit in Abhängigkeit des Überstromes darstellt. Sollte der von den Stromerfassungsmitteln 11 erfasste Strom die eingestellte Auslösekennlinie für die zugehörige Auslösezeit überschreiten, aktiviert der Elektronikauslöser 12 ein Auslöserelais 14, das seinerseits über einen Betätigungsmechanismus 15 den Strom durch den Verbraucher 4 durch Öffnen der Schalterkontakte 16 unterbricht.

Der Elektronikauslöser 12 und die Anzeigeeinheit weisen jeweils eine Kommunikationsschnittstelle 17 bzw. 21 auf, die miteinander über eine drahtgebundene Kommunikationsverbindung 5 Daten über ein Busprotokoll austauschen können. An die Kommunikationsschnittstelle 21 der Anzeigeeinheit 20 schließt sich ein Mikroprozessor 22 an, der seinerseits mit einem Schreib-Lese-Speicher 23 und einer Flachanzeige 24, beispielsweise in Form einer Flüssigkristall-Anzeige, verbunden ist. In Fig. 1 zeigt die Flachanzeige 24 beispielhaft das Abbild 25 einer Auslösekennlinie zusammen in einem doppeltlogarithmischen Koordinatennetz 26.

Nach dem erfindungsgemäßen Verfahren werden die mittels der am Schutzschalter 10 befindlichen Stellmittel 13 gewählten Einstellparameter in den Elektronikauslöser 12 übernommen und mithilfe des Mikroprozessors im Elektronikauslöser in eine Auslösekennlinie umgewandelt. Der Elektronikauslöser übermittelt unmittelbar die Einstellparameter und gegebenenfalls weitere den Typ und die Variante des Schutzschalters 10 kennzeichnende Daten über die Kommunikationsschnittstelle 5 an den Mikroprozessor 22 der Anzeigeeinheit 20. Der Mikroprozessor 22 legt die übermittelten Daten in dem Schreib-Lese-Speicher 23 ab und berechnet aus den gespeicherten Einstellparametern ein Abbild 25 der aktuell vom Elektronikauslöser 12 verwendeten Auslösekennlinie. Das berechnete Abbild 25 wird zusammen mit dem Koordinatennetz 26 über den Mikroprozessor 22 auf der Flachanzeige 24 zu Anzeige gebracht. Das Koordinatennetz 26 wird, erforderlichenfalls angepasst an die Niedrigst- und Höchstwerte des Abbildes 25, ebenfalls vom Mikroprozessor 22 berechnet und vorteilhafterweise im Schreib-Lese-Speicher 23 abgelegt.

Sobald mit einem oder mehreren der Stellmittel 13 am Schutzschalter 10 eine Veränderung mindestens eines Einstellparameters vorgenommen worden ist, wird diese veränderte Einstellung über die Kommunikationsverbindung 5 an die Anzeige 20 übertragen und auf der Flachanzeige 24 unmittelbar als geändertes Abbild 25 der Auslösekennlinie dargestellt. Somit nimmt ein Bediener zeitlich und größenmäßig unmittelbar die Veränderungen der Auslösekennlinie durch Änderungen an den Stellmitteln 13 des Schutzschalters 10 wahr.

Eine alternative Ausführung des erfindungsgemäßen Verfahrens besteht darin, dass auch über die Anzeigeeinheit 20 die Einstellparameter eingestellt oder verändert werden können. Hierzu sind an der Anzeigeeinheit 20 Stellmittel 27 vorgesehen, die in Fig. 1 zusammen mit ihren Verbindungen zum Mikroprozessor 25 mit unterbrochenen Linien dargestellt sind. Mit den zusätzlichen Stellmitteln 27 können Werte der Einstellparameter gewählt werden, die über den Mikroprozessor 22, die Kommunikationsschnittstelle 21 der Anzeigeeinheit 20, die Kommunikationsverbindung 5 und die Kommunikationsschnittstelle 17 in den Elektronikauslöser 12 übertragen und gespeichert werden. Die bildliche Darstellung der Auslösekennlinie erfolgt wieder durch Rückübertragung der Einstellparameter über die Kommunikationsverbindung 5 zur Anzeigeeinheit 20 und der Erzeugung und Darstellung als Abbild 25 auf der Flachanzeige 24.

Aus Sicherheitsgründen kann gefordert werden, dass die Einstellparameter, die mit den am Schutzschalter 10 angebrachten Stellmitteln 13 eingestellt werden, Grenzwerte darstellen, die durch Werte, die mit den an der Anzeigeeinheit 20 angebrachten Stellmitteln 27 eingestellt werden können, nicht überschritten werden dürfen. Hierzu wird das erfindungsgemäße Verfahren in der Weise weitergebildet, dass der Elektronikauslöser 12 für jeden einzelnen Einstellparameter ein Vergleich zwischen dem mittels eines der schutzschalterseitigen Stellmittel 13 gewählten Grenzwert und dem entsprechenden von der Anzeigeeinheit 20 übertragenen, mittels eines der anzeigeseitigen Stellmittel 27 gewählten Wert vorgenommen wird. Nur in den Fällen, bei denen ein anzeigeseitig eingestellter Wert für den betreffenden Einstellparameter kleiner als der schutzschalterseitig eingestellte Grenzwert ist, wird der anzeigeseitig gewählte Wert vom Elektronikauslöser 12 wirksam übernommen. Im gegenteiligen Falle wird der anzeigeseitig gewählte Wert vom Elektronikauslöser 12 verworfen und damit der betreffende Grenzwert nicht durch einen höheren, sicherheitsmäßig bedenklichen Wert überschrieben.

Eine weitere alternative Ausführung des erfindungsgemäßen Verfahrens besteht darin, dass das Einstellen der Auslösekennlinie ausschließlich über die Anzeigeeinheit 20 erfolgt, indem die Werte für die Einstellparameter mittels der Stellmittel 27 an der Anzeigeeinheit vorgegeben werden. Bei dieser Ausführungsform entfallen die Stellmittel 13 für den Schutzschalter 10.

Eine beispielhafte Anwendung des erfindungsgemäßen Verfahrens besteht darin, dass nach dem Verbinden des Verbrauchers 4 mit der Stromquelle 3 durch Schließen der Schalterkontakte 16 der Stromverlauf des Verbrauchers mit geeigneten Stromerfassungsmitteln zur Anzeigeeinheit 20 übertragen wird, beispielsweise über eine geeignete Ankopplung an die Kommunikationsverbindung 5. Die übertragenen Werte des erfassten Einschaltstromverlaufes werden mithilfe des Mikroprozessors 22 in ein Strom-Zeit-Diagramm 28 umgerechnet, das auf der Flachanzeige 24 gemäß Fig. 2 zusammen mit dem Abbild 25 einer zurzeit gültigen Auslösekennlinie sowie dem Koordinatennetz 26 dargestellt wird. Die Auslösekennlinie kann durch Verändern der Einstellparameter mittels der Stellmittel 13 bzw. 27 in unmittelbarer und anschaulicher Weise sowie unter Beachtung eines Sicherheitsabstandes optimal an das Strom-Zeit-Diagramm 28 des Verbrauchers 4 genähert werden, wie das Abbild 25' der optimierten Auslösekennlinie in Fig. 2 zeigt. Die optimierte Auslösekennlinie, die mithilfe des derart weitergebildeten Verfahrens optimal eingestellt worden ist, gewährleistet, dass zum einen die Einschaltstromspitze des Verbrauchers 4, insbesondere eines Elektromotors, nicht zu einer kurzverzögerten Abschaltung führt und zum anderen ein optimaler Schutz gegen mittlere und geringe Überlastung, die zu einer langzeitverzögerten Abschaltung führen soll, besteht.

Als Anzeigeeinheit 20 kann ein mit dem Schutzschalter 10 über die Kommunikationsverbindung 5 zu verbindender PC, ein Notebook, ein Minicomputer oder eine spezielle Anzeigeeinrichtung verwendet werden. Im letzteren Fall kann die Anzeigeeinheit 20 alternativ mechanisch mit dem Schutzschalter 10 verbunden oder in diesem integriert sein. In diesem Falle ist es sinnvoll, einen gemeinsamen Mikroprozessor für den Elektronikauslöser 12 und die Anzeigeeinheit 20 sowie nur einen Satz Stellmittel 13 oder 27 vorzusehen.

## Patentansprüche

1. Verfahren zum Einstellen und Darstellen der Auslösekennlinie von Schutzschaltern, die mit Stromerfassungsmitteln (11) zum Erfassen der durch den Schutzschalter (10) fließenden Ströme, mit einem Elektronikauslöser (12) zum Abschalten der durch den Schutzschalter (10) fließenden Ströme beim Überschreiten einer durch Einstellparameter repräsentierten Auslösekennlinie und Stellmitteln (13) zum Wählen der Einstellparameter ausgestattet sind, mit einer Kommunikationsverbindung (5) zwischen dem Elektronikauslöser (12) und einer Anzeigeeinheit (20), mit folgenden Merkmalen:
A die mittels der Stellmittel (13) einstellbaren Einstellparameter werden vom Elektronikauslöser (12) übernommen,
B vom Elektronikauslöser (12) werden die Einstellparameter über die Kommunikationsverbindung (5) an die Anzeigeeinheit (20) übertragen,
C in der Anzeigeeinheit (20) werden die übertragenen Einstellparameter gespeichert und mikroprozessorgestützt in die Auslösekennlinie umgerechnet,
D auf der Anzeigeeinheit (20) wird das Abbild (25) der Auslösekennlinie zusammen mit einem Koordinatennetz (26) dargestellt.

2. Verfahren nach vorstehendem Anspruch, **dadurch gekennzeichnet, dass** mittels an der Anzeigeeinheit (20) vorgesehener Stellmittel (27) einstellbare Einstellparameter über die Kommunikationsverbindung (5) an den Elektronikauslöser (12) übertragen, von diesem übernommen und mikroprozessorgestützt in eine aktualisierte Auslösekennlinie verwandelt werden.

3. Verfahren nach vorstehendem Anspruch, **dadurch gekennzeichnet, dass** nur diejenigen von den zur Anzeigeeinheit (20) gehörenden Stellmitteln (27) eingestellten Einstellparameter vom Elektronikauslöser (12) übernommen werden, die kleiner als die von den zum Schutzschalter (10) gehörenden Stellmitteln (13) eingestellten Einstellparameter sind.

4. Verfahren zum Einstellen und Darstellen der Auslösekennlinie von Schutzschaltern, die mit Stromerfassungsmitteln (11) zum Erfassen der durch den Schutzschalter (10) fließenden Ströme, mit einem Elektronikauslöser (12) zum Abschalten der durch den Schutzschalter (10) fließenden Ströme beim Überschreiten einer durch Einstellparameter repräsentierten Auslösekennlinie ausgestattet sind, mit einer Kommunikationsverbindung (5) zwischen dem Elektronikauslöser (12) und einer Anzeigeeinheit (20), mit folgenden Merkmalen:
B vom Elektronikauslöser (12) werden die Einstellparameter über die Kommunikationsverbindung (5) an die Anzeigeeinheit (20) übertragen,
C in der Anzeigeeinheit (20) werden die übertragenen Einstellparameter gespeichert und mikroprozessorgestützt in die Auslösekennlinie umgerechnet,
D auf der Anzeigeeinheit (20) wird das Abbild (25) der Auslösekennlinie zusammen mit einem Koordinatennetz (26) dargestellt,
E mittels an der Anzeigeeinheit (20) vorgesehener Stellmittel (27) einstellbare Einstellparameter werden über die Kommunikationsverbindung (5) an den Elektronikauslöser (12) übertragen,
F die übertragenen Einstellparameter werden vom Elektronikauslöser (12) übernommen und mikroprozessorgestützt als Auslösekennlinie gespeichert.

5. Verfahren nach Anspruch 1 oder 4, **dadurch gekennzeichnet, dass** die Kommunikation zwischen dem Elektronikauslöser (12) und einer mit dem Schutzschalter (10) verbundenen Anzeigeeinheit (20) durchgeführt wird.

6. Verfahren nach Anspruch 1 oder 4, **dadurch gekennzeichnet, dass** die Kommunikation zwischen dem Elektronikauslöser (12) und einer mit von dem Schutzschalter (10) getrennten Anzeigeeinheit (20) durchgeführt wird.

7. Verfahren nach Anspruch 1 oder 4, **gekennzeichnet durch** ein mikroprozessorgestützt generiertes Koordinatennetz (26).

8. Verfahren nach Anspruch 1 oder 4, **gekennzeichnet durch** ein doppeltlogarithmisches Koordinatennetz (26).
